# EUROPÄISCHE PATENTSCHRIFT

(11) **EP 3 554 809 B1**
(45) Veröffentlichungstag und Bekanntmachung des Hinweises auf die Patenterteilung: **25.03.2026**
(21) Anmeldenummer: 17811905.3
(22) Anmeldetag: 04.12.2017
(51) Int. Cl.: B29C 71/04, B32B 27/32, B29C 59/04, B29C 35/08, B29C 48/00, B29C 48/08, B29C 48/21, B32B 5/02, B32B 5/18, B32B 5/24, B32B 7/04, B32B 27/06, B32B 27/12, B32B 7/12, B32B 27/20

(54) **VERFAHREN ZUR HERSTELLUNG EINER LACKIERTEN GENARBTEN FOLIE, DIE LACKIERTE GENARBTE FOLIE UND DEREN VERWENDUNG**
PROCESS FOR PRODUCING A COATED GRAINED FILM, THE COATED GRAINED FILM, AND USE THEREOF
PROCÉDÉ POUR LA FABRICATION D'UNE FEUILLE LAQUÉE CHAGRINÉE, FEUILLE LAQUÉE CHAGRINÉE ET UTILISATION CORRESPONDANTE

(30) Priorität: 19.12.2016 DE 102016225469
(43) Veröffentlichungstag der Anmeldung: 23.10.2019
(73) Patentinhaber: Benecke-Kaliko GmbH, 30419 Hannover (DE)
(72) Erfinder: MANI, Joseph, 73054 Eislingen (DE); HÜLSEWEDE, Volker, 73326 Deggingen (DE)
(74) Vertreter: Preusser, Andrea
(86) Internationale Anmeldenummer: PCT/EP2017/081335
(87) Internationale Veröffentlichungsnummer: WO 2018/114300

(56) Entgegenhaltungen:
- EP-A1- 1 688 460
- EP-B1- 1 688 460
- DE-A1- 102005 051 392
- US-A1- 2015 337 126

## Beschreibung

Die Erfindung betrifft ein Verfahren zur Herstellung einer lackierten genarbten Folie oder eines Folienlaminats mit einer lackierten genarbten Oberfolie und mit mindestens einer Unterfolie, diese Folie bzw. das Folienlaminat und deren Verwendung zur Herstellung tiefgezogener Formteile.

Die Erfindung geht von dem nachfolgend dargestellten Stand der Technik aus: Die DE 100 18 196 A1 betrifft ein Verfahren zur Herstellung einer genarbten Folie aus einem Material mit einem Gehalt an unvernetztem Polyolefin und gegebenenfalls weiteren Additiven, wobei die Folie mit Elektronenstrahlen behandelt wird. Die in üblicher Weise erhaltene Folie wird zum Erzielen einer zum Tiefziehen geeigneten Narbfestigkeit mit Elektronenstrahlen behandelt. Die genarbte Folie mit einer Dichte von etwa 0,7 bis 1,2 g/cm³ wird tiefgezogen. Um dieses Verfahren erfolgreich durchzuführen, werden Vernetzungshilfsmittel, so in Form von Trimethylolpropantriacrylat, herangezogen. Die Behandlung der Folien mit Elektronenstrahlen wird derartig durchgeführt, dass sich in der bestrahlten Folie ein Gelgehalt von etwa 5 bis 80% einstellt.

Auf dem Stand der Technik nach der DE 100 18 196 A1 beruht die technische Lehre der EP 1 149 858 B2. Sie betrifft die Herstellung einer genarbten Formkörpers mit einem Gehalt an partiell vernetzten Polyolefinen und gegebenenfalls weiteren Additiven. Dabei wird mit unvernetzten Polyolefinen mit beigemischten Stabilisatoren und gegebenenfalls weiteren Additiven, wie Vernetzungshilfsmitteln, eine Folie hergestellt. Diese wird geprägt. Die geprägte Folie wird zum Erzielen einer im Tiefziehprozess geeigneten Narbstabilität mit Elektronenstrahlen behandelt, so dass sich in der Folie ein Gelgehalt von 15 bis 65 Gew.-% einstellt. Diese Folie kann zu einem Formkörper mit genarbter Oberfläche tiefgezogen werden.

Die EP 1 538 175 B1 beschreibt die Herstellung eines genarbten Formkörpers mit einer Oberfläche, die partiell vernetzte polymere Materialien und gegebenenfalls weitere Additive enthält. Dieser Formkörper weist mindestens eine auf die Oberfolie laminierte Unterfolie auf. Das Folienlaminat wird geprägt, zum Erzielen einer im Tiefziehprozess geeigneten Narbstabilität mit Elektronenstrahlen behandelt. Das behandelte Folienlaminat wird zu einem Formkörper tiefgezogen. Besonderes Kennzeichen dieses bekannten Verfahrens ist es, dass mindestens eine Unterfolie mit einem geschäumten Material einer Dichte zwischen 35 und 120 g/l und eines Gelgehaltes von weniger als 80% ausgebildet wird.

Die EP 1 688 460 B1 offenbart die Herstellung einer genarbten Folie oder eines genarbten Folienlaminats mit einer Oberfolie und zumindest einer Unterfolie. Die Folie oder die Oberfolie des Folienlaminats basieren auf einer Masse, die Polyolefine und gegebenenfalls weitere Polymere und Additive enthält, wobei die Folie oder das Folienlaminat nach einem die Narbstruktur bildenden Prägeschritt durch Elektronenstrahlen vernetzt wird. Ein besonderes Kennzeichen dieses bekannten Verfahrens liegt in dem Gelgehalt der Folie von 3 bis 15 Gew.-%, gemessen vor dem Prägeschritt. Das Ausgangsmaterial für die Folie bzw. Oberfolie ist für dieses Verfahren charakterisierend. Danach enthält die entsprechende Zusammensetzung 5 bis 50 Gew.-%Polypropylen eines Schmelzpunktes von mehr als 120°C, 5 bis 80 Gew.-% eines Ethylencopolymers oder einer Mischung mehrerer Copolymere eines Schmelzpunktes von jeweils < 100°C und 0 bis 50 Gew.-% eines Polyethylens einer Dichte von < 0,94 kg/l und eines MFI (190°C, 2,16 kg) von weniger als 5 g/10 min.

Bevor die Aufgabe der vorliegenden Erfindung dargestellt wird, sollen folgende Betrachtungen vorausgestellt werden: Bei Instrumententafeln in einem Kraftfahrzeug ist es Standard, sich bezüglich des Designs den angrenzenden Bauteilen anlehnen. Eine genarbte TPO-Folie ist kritisch zu sehen, wenn sie eine schlechte Haptik aufweist. Ein übliches thermoplastisches Polyolefin (TPO), wie zum Beispiel Polypropylen, wird im Vergleich zu Polyvinylchlorid (PVC) und Polyurethan (PU) als "hart" und "plastikartig" beschrieben. Daher wurden auf TPO basierende Folien durch andere Materialien, wie durch PVC und PU, verdrängt. Es war bisher verfahrenstechnisch keine hinlängliche Reduktion der Härte gelungen. Der Grund liegt darin, dass bei zunehmender Weichheit eine starke Klebeneigung der extrudierten TPO-Folien beobachtet wurde, welche einen weiteren Fertigungsprozess verhindert. Eine extrudierte Folie klebte derart im aufgewickelten Zustand, dass sie nicht mehr abgewickelt und somit nicht mehr fertiggestellt werden kann. Hier bestünde zwar die Möglichkeit, in den Trennprozess chemische Trennmittel einzuführen. Zum anderen könnte vor dem Aufwickeln eine Plasmabehandlung stattfinden. Diese Maßnahmen führen zu einer Erhöhung der Herstellungskosten und zu einer nachteiligen Veränderung der Materialeigenschaften, so zu einer Reduktion der Haftung eines aufgebrachten Lacks, zu nachteilig veränderten Prägeeigenschaften und zu unerwünschten Emissionen. Darüber hinaus zeigen hier Folien zumeist einen sehr hohen Glanzgrad und eine unzureichende Stabilität im Alterungsverhalten bei 120°C. Zwar entspricht es der Regel, Folien mit stark mattierten Lacken zu beschichten. Diese Lackierung ist nur begrenzt und nur in Abhängigkeit vom Verstreckungsgrad während des Thermoformierprozesses in der Lage, den geforderten gleichmäßig niedrigen Glanz zu gewährleisten. Des Weiteren führt eine zu starke Mattierung der Lackschichten zu einer reduzierten Beständigkeit gegen Abrieb und zu einer erhöhten Schreibanfälligkeit, wodurch diese Maßnahme auch stark limitiert ist.

Ausgehend von dem vorstehend geschilderten Stand der Technik sowie den folgenden grundsätzlichen Betrachtungen zum vorliegenden technischen Bereich zielt die Erfindung darauf ab, das eingangs bezeichnete Verfahren vorteilhaft weiterzubilden, um die danach erhaltenen Erzeugnisse nach dem Positiv-Thermoformierprozess unter hohem Erhalt der Narbqualität zu behandeln, wobei sich die erhaltenen Formkörper durch eine hohe optische Wertigkeit und eine angenehme Haptik auszeichnen sollen. Die optische Wertigkeit wird erreicht, wenn die Folie im unterschiedlich verstreckten Bereich eines Bauteils einen gleichmäßigen niedrigen Glanzgrad von weniger als 1 aufweist und einen homogenen Narbausfall zeigt. Gleichzeitig wird sie als haptisch angenehm empfunden, wenn sie eine entsprechende Weichheit besitzt. Diese lässt sich sowohl horizontal als auch vertikal (Eindruck-Haptik) bestimmen. Die vertikale Haptik ist von besonderer Bedeutung. Sie führt auch zu einer Verbesserung der horizontalen Haptik. Somit musste eine neue Lehre, insbesondere auch eine Kombination von polymeren Ausgangsmaterialien, ermittelt werden, um die vorgenannten Nachteile des Standes der Technik zu beheben.

Erfindungsgemäß wird diese Aufgabe gelöst durch ein Verfahren zur Herstellung einer lackierten genarbten Folie oder eines Folienlaminats mit einer lackierten genarbten Oberfolie und mit mindestens einer Unterfolie, wobei die polymere Ausgangsmischung zu einer Folie extrudiert oder die Folie als Oberfolie mit einer Unterfolie zu einem Folienlaminat coextrudiert oder die Folie als Oberfolie gesondert mit der Unterfolie verbunden wird, die Folie oder die Oberfolie des Folienlaminats in einem Prägeschritt genarbt und darauf mit Elektronenstrahlen behandelt wird, wobei dieses Verfahren dadurch gekennzeichnet ist, dass zur Extrusion eine polymere Ausgangsmischung mit einem Gehalt an einem Ethylen-Propylen-Dien-Mischpolymer (EPDM) einer Shore-Härte A von 40 bis 80 und einem thermoplastischen Polyolefin (TPO) einer Shore-Härte A von 40 bis 90 herangezogen wird, wobei die polymere Ausgangsmischung weitgehend unvernetzt ist, um nach der Extrusion eine lackierte genarbte Folie bzw. lackiertes genarbtes Folienlaminat zu bilden und dann die lackierte genarbte Folie bzw. die lackierte genarbte Oberfläche des Folienlaminats mit Elektronenstrahlen derartig zu behandeln, bis sich ein Gelgehalt von 10 bis 70 Gew.-% eingestellt hat, wobei der Gelgehalt der lackierten Folie bzw. lackierten Oberfolie vor dem Vernetzen weniger als 3 Gew.-% beträgt und wobei der Gelgehalt der Folie bzw. der Oberfolie des Folienlaminats durch Behandeln mit Elektronenstrahlen auf 10 bis 70 Gew.-% eingestellt wird.

Bei der Ermittlung dieser erfindungsgemäßen Verfahrenslehre spielten folgende Erkenntnisse der Erfinder eine relevante Rolle: Für eine angenehme Haptik spielt der Härtegrad der herangezogenen Polymeren eine bedeutende Rolle. Grundsätzlich gilt es, dass, je weicher ein Polymer ist, desto angenehmer die Haptik ist. Um eine Gummi-elastische Eigenschaft zu erreichen, werden im Rahmen der Erfindung Materialien ausgewählt, die niedrige Härte- bzw. niedrige Shore A-Werte aufweisen und beim Bestrahlen mit elektronischen Strahlen zu einer wünschenswerten Vernetzung führen. Weiche EPDM mit einem hohen Anteil an freien C-C-Doppelbindungen sind sehr amorph und zeigen diese vorteilhaften Eigenschaften. Durch die Verwendung derartiger Polymere kann, was überraschend ist, auf die Verwendung von Vernetzungshilfsmitteln vollkommen verzichtet werden. Vernetzungshilfsmittel sind nicht nur kostenaufwändig, sondern sie führen auch zu nachteiligen Eigenschaften und zu unerwünschten Emissionen einer Konstruktion. Die vorliegende Erfindung wurde unter Berücksichtigung dieser Erkenntnisse entwickelt.

Die erfindungsgemäße Verfahrenslehre kann vielfältige Ausgestaltungen erfahren. So ist es bevorzugt, dass der Gelgehalt der lackierten Folie bzw. lackierten Oberfolie vor dem Vernetzen weniger als 1 Gew.-% und insbesondere 0 Gew.-% beträgt.

Es hat sich auch als vorteilhaft gezeigt, wenn die polymere Ausgangsmischung 10 bis 50 Gew.-% EPDM, insbesondere 30 bis 40 Gew.-% EPDM und 50 bis 90 Gew.-%, insbesondere 65 bis 75 Gew.-% TPO enthält.

In Einzelfällen ist es vorteilhaft, wenn die polymere Ausgangsmischung zusätzlich LLDPE, insbesondere als teilweisen Ersatz der Bestandteile EPDM und/oder TPO enthält, wobei in der polymeren Ausgangsmischung 17 bis 35 Gew.-% LLDPE, 17 bis 35 Gew.-% EPDM und 35 bis 65 Gew.-% TPO enthalten sind. Dieser Gedanke wird dadurch vorteilhaft weitergebildet, wenn in der polymeren Ausgangsmischung 17 bis 35 Gew.-%, insbesondere 22 bis 28 Gew.-% LLDPE, 17 bis 35 Gew.-%, insbesondere 22 bis 28 Gew.-% EPDM und 35 bis 65 Gew.-%, insbesondere 45 bis 60 Gew.-% TPO enthalten sind.

Den physikalischen Charakteristiken der oben beschriebenen Komponenten LLDPE, TPO und EPDM sollte Aufmerksamkeit zugewandt werden. So ist es mit guten Vorteilen verbunden, wenn die Bestandteile der polymeren Ausgangsmischung folgende Charakteristiken aufweisen: LLDPE einen MFI (190°C, 2,16 kg) von 0,05 bis 5,0, insbesondere von 0,5 bis 2,0 g/10 min und/oder eine Shore-Härte A von 40 bis 80, insbesondere von 50 bis 60; TPO einen MFI (230°C, 2,16 kg) von 0,05 bis 5,0, insbesondere von 0,5 bis 1,0 g/10 min, und/oder eine Shore-Härte A von 40 bis 90, insbesondere von 70 bis 85; EPDM eine Shore-Härte A von 40 bis 80, insbesondere von 45 bis 60 und/oder einen Dien-Gehalt von 0,5 bis 15 Gew.-%, insbesondere von 2 bis 10 Gew.-%, wobei der Bereich von 3 bis 8 Gew.-%, insbesondere von 4 bis 6 Gew.-%, besonders vorteilhaft ist.

Nachfolgend sollen besonders vorteilhafte Polymere bezeichnet werden, die unter die oben zur Definition der Erfindung herangezogenen Begriffe LLDPE, TPO und EPDM fallen, wenngleich es die Erfindung auch zulässt, dass in gewissem Umfang andere Polymere zusätzlich herangezogen werden, sofern sie den erfindungsgemäß angestrebten technischen Erfolg nicht beeinträchtigen.

LLDPE (linear low density polyethylene): Polyethylen basierende Kunststoffe mit einem Gewichtsanteil an Ethylen von > 50 Gew.-%. Als Ethylen-basierte, weiche Polymere können insbesondere Copolymere des Ethylens mit alpha-Olefinen, wie Propylen, 1-Buten, 1-Hexen, 1-Octen, Vinylacetat, Methyl- oder Butylacrylat, sein; MFI Bereich 0,05 bis 5,0 g/10 min (190°C; 2,16 kg); Dichtebereich von 0,850 bis 0,900 g/cm³; TPO = TPE-O (thermoplastisches Elastomer auf Olefin-Basis): Polymere basierend auf Propylen und gegebenenfalls Copolymeren, insbesondere Ethylen mit einem Gewichtsanteil an Propylen von > 50 Gew.-%; oben genannte PP-Typen in einer Mischung mit EPR, sogenannte RAHECO (Random Heterophasen Copolymere PP/EPR-Mischungen), können ebenfalls verwendet werden; MFI Bereich 0,05 bis 5,0 g/10 min (230°C, 2,16 kg); Dichte zwischen 0,86 und 0,93 g/cm³; EPDM (Ethylenpropylendien-Misch-polymer): Terpolymer aus Ethylen, Propylen und weiteren Dienen, insbesondere Pentadien, Hexadien oder Ethylidennorbornen. Die Verhältnisse der drei Copolymere können hier sehr vielfältig sein. So bewegt sich der Ethylenanteil zwischen 40 und 90 Gew.-%, der des Propylens zwischen 3 und 50 Gew.-% und der des Diens zwischen 0,5 und 15 Gew.-%. Die Dichte liegt zwischen 0,85 und 0,900 g/cm³, die Mooney-Viskosität ML 1+4 (125°C) beträgt 5 bis 200 MU.

Der erfindungsgemäß angestrebte technische Erfolg wird dann umfänglich erreicht, wenn der Gelgehalt der Folie bzw. der Oberfolie des Folienlaminats durch Behandeln mit Elektronenstrahlen auf 10 bis 70 Gew.-%, insbesondere auf 30 bis 60 Gew.-%, eingestellt wird, insbesondere durch Behandeln mit Elektronenstrahlen einer Strahlungsdosis von 20 bis 150 kGy, insbesondere von 40 bis 80 kGy.

Die Herstellung eines Folienlaminats mit einer lackierten Oberfläche und mindestens einer Unterfolie unterliegt rein fachmännischen Erwägungen. Dennoch gilt es als bevorzugt, dass die Oberfolie durch Coextrusion, Kaschieren oder durch Verkleben mit einer kompakten oder einer geschäumten Unterfolie versehen wird. Dabei ist es besonders vorteilhaft, wenn die Oberfolie bzw. das Folienlaminat aus Oberfolie und Unterfolie mit einer Textilschicht versehen wird, so zum Beispiel insbesondere mit einem Gewebe, Gewirke und/oder auch einem Vlies. Es gilt in Einzelfällen als bevorzugt, wenn die Unterfolie aus einem Polyolefinschaum auf der Basis von Polyethylen und/oder Polypropylen beruht. Hier ist eine bevorzugte Dichte des geschäumten Polymermaterials mit 35 bis 120 g/l zu bezeichnen.

### Hierzu konkrete Ausführungen:

So kann somit bei Ausbildung einer Oberflächenstrukturierung und Laminieren eines textilen Flächengebildes auf die Folie ein Kunstleder erhalten werden, das besondere Eignung für den Automobil- und Modebereich zeigt. Von besonderem Wert ist die Ausbildung eines Schaumfolienlaminats, das eine erfindungsgemäß gebildete Folie bzw. kompakte Oberfolie aufweist, deren Dicke durch Extrusion auf vorzugsweise etwa 0,2 bis 2 mm, insbesondere bis 0,8 mm, und ganz besonders bevorzugt auf etwa 0,5 mm eingestellt wird. Diese Folie bzw. Oberfolie wird vorzugsweise mit einer im Stand der Technik geläufigen Lackschicht versehen, insbesondere mit einem Polyurethan-basierten Lack, was im Rahmen der Erfindung der Regelfall ist. Der Auftrag derartiger Schichten erfolgt vorzugsweise in Form einer wässrigen Dispersion, um die wünschenswerte niedrige Dicke der Lackschicht einstellen zu können. Es gibt aber auch fachmännisch bekannte Lösungsmittel-basierte Systeme. Besonders vorteilhaft ist der Auftrag einer Lackschicht anhand des Rastertiefdruckverfahrens. Grundsätzlich kann die Lackschicht vor oder nach dem Prägen einer Narbung ausgebildet werden.

Die Lackschicht hat im Rahmen der Erfindung vorzugsweise eine Dicke von etwa 1 bis 15 mm, insbesondere von etwa 2 bis 10 µm, und ganz besonders bevorzugt von 2 bis 5 µm. Die oben beschriebene Konstruktion wird vorzugsweise mit einer Unterfolie aus geschäumtem Polymermaterial laminiert. Die Unterfolie weist insbesondere eine Dichte von 35 bis 120 g/l und einen Gelgehalt von weniger als 80% auf. Kompakte Unterfolien weisen den Vorteil auf, geometrisch komplexere Bauteile in Thermoformierverfahren mit Verstreckungsgraden von mehr als 80% zu erzeugen. Mitteldichte Schäume mit Dichten von weniger als 700 kg/m³ weisen ebenfalls gleiche Dehnungen wie Kompaktfolien auf und können als Ersatz für kompakte Unterfolien verwendet werden.

Es gilt des Weiteren als besonders bevorzugt, wenn das Folienlaminat mit der lackierten genarbten Oberfolie im Rahmen eines einzigen Verfahrensschritts hergestellt wird, bei dem auf die lackierte Oberfolie eine geschäumte Unterfolie laminiert und die lackierte Oberfolie gleichzeitig geprägt und anschließend die Behandlung mit Elektronenstrahlen durchgeführt wird.

Bei der Durchführung der Erfindung ist es in Einzelfällen zweckmäßig, dem polymeren Ausgangsmaterial bzw. den Ausgangsmaterialien der weiteren Schichten des Folienlaminats Additive einzuverleiben. Als vorteilhafte Additive können insbesondere Antioxidantien, Lichtschutzmittel, Gleitmittel und/oder Pigmente eingesetzt werden, dies insbesondere in einer Menge von 0,5 bis 5 Gew.-% der jeweiligen Schicht. Als Antioxidantien gelten Phenol-Derivate und/oder Phosphite und/oder Lichtschutzmittel sterisch gehinderter Amine als vorteilhaft.

Schließlich betrifft die vorliegende Erfindung auch eine lackierte genarbte Folie oder ein mehrlagiges Folienlaminat mit einer lackierten Oberfolie, das nach dem vorstehend beschriebenen erfindungsgemäßen Verfahren erhältlich ist und gekennzeichnet ist durch eine lackierte Oberfolie einer Shore-Härte A von 40 bis 80, insbesondere 60 bis 80, und eines Gelgehalts von 10 bis 70% Gew.-%, insbesondere von 30 bis 60 Gew.-%.

Der besondere Wert der Erfindung liegt darin, die angesprochene Folie bzw. das Folienlaminat, erhältlich nach dem erfindungsgemäßen Verfahren, als tiefgezogenes, insbesondere hinterspritztes oder hinterpresstes Formteil, insbesondere in Flugzeugen, in Kraftfahrzeugen, für Fahrzeuginnenverkleidungen oder -verkleidungsteile, insbesondere Schalttafeln oder Armaturenbrettern, Säulen, Kraftfahrzeugseitenverkleidungen, -türverkleidungen und -ablagen, heranzuziehen. Ein besonders hervorstechender Vorteil liegt in der Verwendung der Folie bzw. des Folienlaminats als ungeschwächte Dekorfolie für Airbagverkleidungen.

Die Erfindung soll nachfolgend im Lichte der vorstehend dargestellten bevorzugten Ausgestaltungen allgemein erläutert werden, auch im Hinblick auf erzielte Vorteile:
Erfindungsgemäß kann durch den ausgeschlossenen Gehalt eines Gels in der Folie bzw. im Folienlaminat von weniger als 3 Gew.-%, bevorzugt von 0 Gew.-%, ein vorteilhaftes Prägen erfolgen, wobei die Geschwindigkeit der Prägewalzen hoch gewählt werden kann. Im Anschluss an die Prägung erfolgt eine Vernetzung des Materials für eine hohe Narbfestigkeit beim Tiefziehen und/oder Verformen. Die nach dem die Narbstruktur bildenden Prägeschritt erfolgende Vernetzung erfolgt insbesondere durch die bezeichnete Elektronenstrahlvernetzung. Handelt es sich bei dem erfindungsgemäß hergestellten Gegenstand um eine Folie, zeichnet sich diese durch eine besonders gute Prägbarkeit bei guter Narbbildung auf. Die Folie kann während des und/oder vor dem und/oder nach dem die Narbstruktur bildenden Prägeschritt und/oder nach der Vernetzung zu einem Verbundgebilde laminiert und/oder beschichtet werden, zum Beispiel mit einem PUR-Lack, und im Anschluss an die Vernetzung zu einem mehrlagigen, genarbten Formkörper, beispielsweise einer Innenverkleidung eines Kraftfahrzeugs, tiefgezogen werden.

Handelt es sich bei dem nach dem erfindungsgemäßen Verfahren zunächst hergestellten Gegenstand um ein Folienlaminat mit einer lackierten Oberfolie und zumindest einer Unterfolie, so zeichnet sich auch dieses Laminat durch eine hervorragende Prägbarkeit bei guter Narbbildung aus. Nach dem Prägen und der weitergehenden Vernetzung durch Elektronenstrahlen kann das Folienlaminat zu einem mehrlagigen genarbten Formkörper verformt werden, insbesondere durch einen Tiefziehprozess. Der mehrlagige Formkörper kann mit einem Träger, z.B. aus ABS oder Naturfasern, versehen werden. Dabei ist es von Vorteil, wenn der Träger bei der Herstellung des genarbten mehrlagigen Formkörpers direkt beim Tiefziehprozess mit dem genarbten mehrlagigen Folienmaterial verbunden wird. Die Verbindung von Träger und Unterfolie kann dabei auch über ein Klebersystem erfolgen.

Es ist auch möglich, dass die zur Herstellung des genarbten mehrlagigen Formkörpers aus dem Folienlaminat in einem einzigen Verfahrensgang und unter weitgehendem Ausschluss eines Vakuums, insbesondere unter weitgehendem Ausschluss eines Klebersystems, ein trägergestützter, genarbter, mehrlagiger Formkörper dadurch gebildet wird, dass a) ein in seiner räumlichen Struktur vorgefertigter Träger oberflächlich erwärmt und auf die rückseitig erwärmte Seite des vernetzten genarbten mehrlagigen Folienlaminats gepresst wird oder b) ein sich in plastischem Zustand befindendes Ausgangsmaterial des Trägers in einem Werkzeug mit der Rückseite des vernetzten genarbten mehrlagigen Folienlaminats verbunden wird.

Die nach dem erfindungsgemäßen Verfahren hergestellten Folien oder Folienlaminate sowie die daraus erzeugten Formkörper zeigen zahlreiche Vorteile. Aufgrund der guten Prägbarkeit und Narbabbildung lassen sich die Folien oder Folienlaminate sehr gut herstellen und die Prägegeschwindigkeit kann, ohne Einbußen in der geprägten Struktur erleiden zu müssen, erhöht werden, was mit einer Effizienzsteigerung des Herstellungsprozesses verbunden ist. Die nach dem erfindungsgemäßen Verfahren hergestellten zu Formkörpern umgebildeten Folien oder Folienlaminate eignen sich besonders als Innenverkleidung von Kraftfahrzeugen, zum Beispiel als Armaturenverkleidung, wobei ein stabiles sauberes Narbbild von hoher Wichtigkeit ist. Bedingt durch die lange Gebrauchsdauer von Kraftfahrzeugen sind gerade Innenverkleidungen von Kraftfahrzeugen hohen Beanspruchungen ausgesetzt. Einem stabilen sauberen Narbbild kommt daher für den Qualitätseindruck der Kraftfahrzeuginnenverkleidung eine besondere Bedeutung zu. Bei dem erfindungsgemäßen Verfahren wird eine Störung der Homogenität des Narbbildes weitestgehend ausgeschlossen. Man erhält ein gewünschtes geprägtes Narbbild. Ein nachteiliges Aufglänzen der Oberfläche wird verhindert.

Die Erfindung zeigt also zusammengefasst vielfältige Vorteile, wie sich dies aus den oberen Schilderungen bereits ergibt. Insbesondere zeigen Bauteile, die anhand der erfindungsgemäßen Folien bzw. Folienlaminate erhalten werden, eine deutliche Verbesserung in der Weichheit. Dies führt zu einer angenehmen Haptik, ähnlich wie bei Folien aus PVC oder PU. Eine angenehme Haptik wird von den Herstellern von Bauteilen stets gefordert. Zudem weist die im Rahmen der Erfindung zunächst erhaltene Folie bzw. das Folienlaminat eine gute Prägbarkeit auf, was durch den bis auf 0 herabgesetzten Gelanteil vor dem Vernetzen mit den Elektronenstrahlen beeinflusst wird. Nach dem Positiv-Tiefziehen sind die Narberhaltung und gleichzeitig ein niedriger Glanz erwünscht. Die entsprechenden Bauteile auf Basis der vorliegenden Erfindung zeigen eine weitere Reduktion des Glanzes, was als höherwertig betrachtet werden kann.

Nachfolgend soll die Erfindung anhand von Beispielen und Vergleichsbeispielen noch näher erläutert werden.

### Beispiele

Die in der folgenden Tabelle 1 formulierten Zusammensetzungen mit den Mengen der Substanzen in Gewichtsteilen wurden auf einem Zweischneckenextruder (ZSK 25 L/D 28) zu Folien einer Dicke von 0,5 mm extrudiert. Die Zylinder- und Düsentemperaturen wurden gemäß den Angaben der Tabelle 2 eingestellt.

**Tabelle 1**

| (Polymere Ausgangsmaterialien/Folienzusammensetzungen) | | | | |
|---|---|---|---|---|
| Substanz | Vergleichsbeispiel 1 | Vergleichs -beispiel 2 | Beispiel 1 (Erfindung) | Beispiel 2 (Erfindung) |
| LLDPE | | | | 27,5 |
| TPE-V | | 30 | | |
| EPDM 1 | 30 | 20 | | |
| EPDM 2 | | | 35 | 27,5 |
| TPO 1 | 70 | 50 | | |
| TPO 2 | | | 65 | 45 |
| Vernetzungshilfsmittel | 2 | 2 | | |
| Pigment | 1 | 1 | 1 | 1 |

| | |
|---|---|
| LLDPE: | Ethylen-Octen Copolymer, Dichte 0,857 g/cm³, MFI 1 g/10 min (190°C, 2,16 kg); Shore-Härte A 54 |
| TPE-V: | Thermoplastisches Elastomer, bestehend aus 35 Gew.-% Polypropylen und 65 Gew.-% eines Copolymers aus Ethylen, Propylen und eines Diens, MFI 15 g/10 min (230°C/ 10 kg), Gelgehalt 28%; Shore-Härte A 82 |
| TPO 1: | Thermoplastisches Elastomer (unvernetzt), bestehend aus 35% h-Polypropylen und 65% eines Copolymeren aus Ethylen und Propylen, Dichte 0,89 g/cm³, MFI 1 g/10 min (230°C, 2,16 kg) |
| TPO 2: | Thermoplastisches Elastomer (unvernetzt), bestehend aus 35% r-Polypropylen und 65% eines Copolymeren aus Ethylen und Propylen, Dichte 0,88 g/cm³, MFI 0,5 g/10 min (230°C, 2,16 kg) |
| EPDM 1: | Ethylen-Propylen-Dien-Mischpolymer, Dichte 0,89 g/cm³, Diengehalt ca. 1 Gew.-%; Shore-Härte A 87 |
| EPDM 2: | Ethylen-Propylen-Dien-Mischpolymer, Dichte 0,88 g/cm³, Diengehalt ca. 4,8 Gew.-%; Shore-Härte A 50 |
| Vernetzungshilfsmittel: | Triallylcyanurat |
| Pigment: | Masterbatch von 25% Ruß in LD-PE Trägermatrix |

**Tabelle 2**

| (Zylinder- und Düsentemperaturen in °C bei der Folienextrusion) | | | | | | |
|---|---|---|---|---|---|---|
| | Zone 1 | Zone 2 | Zone 3 | Zone 4 | Zone 5 | Zone 6 |
| Zylinder | 180 | 175 | 180 | 180 | 195 | 25 |
| Düse | 200 | 200 | 200 | 200 | 200 | 200 |

Anschließend wurden die Folien mit einem ca. 10 µm starken PUR-Lack beschichtet und danach im Rahmen eines kontinuierlichen Prägevorgangs bei einem Liniendruck von 35 bar, einer Prägetemperatur von 175°C und bei Vorheizwalzentemperaturen von 125°C zusammen mit einer weiteren ebenfalls 0,5 mm dicken Folie gleicher Zusammensetzung im Prägespalt zeitgleich laminiert und geprägt. Die Prägegeschwindigkeit zum Erreichen des visuell beurteilten Narbausfalls wurde mittels eines Tachometers ermittelt. Die erhaltenen Muster wurden anschließend mit den in Tabelle 3 beschriebenen Bestrahlungsdosen in einem Elektronenstrahlvernetzer bestrahlt.

**Tabelle 3**

| (Vernetzungsdosen) | | | | |
|---|---|---|---|---|
| | Vergleichsbeispiel 1 | Vergleichs -beispiel 2 | Beispiel 1 (Erfindung) | Beispiel 2 (Erfindung) |
| Dosis [kGy] | 75 | 75 | 50 | 50 |

In der nachfolgenden Tabelle 4 finden sich die verschiedenen Prüfresultate:

**Tabelle 4**

| (Prüfresultate) | | | | |
|---|---|---|---|---|
| | Vergleichs -beispiel 1 | Vergleichs -beispiel 2 | Beispiel 1 (Erfindung) | Beispiel 2 (Erfindung) |
| Extrusionsverhalten | i.O. | i.O. | i.O. | i.O. |
| Prägegeschwindigkeit [m/min] | 3 | 8 | 12 | 12 |
| Gelgehalt der Folie zum Zeitpunkt des Prägeschrittes | < 3% | 9% | 0% | 0% |
| Gelgehalt der Folie zum Zeitpunkt des Tiefziehens | 42% | 40% | 40% | 38% |
| Tiefziehen | prägnante Narbe, kein Aufglänzen | prägnante Narbe, kein Aufglänzen | prägnante Narbe, kein Aufglänzen | prägnante Narbe, kein Aufglänzen |
| Tvor = 170°C | | | | |
| Trück = 180°C | | | | |
| Glanz nach dem Tiefziehen | 1,0-1,3 | 1,1-1,5 | 0,8-0,9 | 0,8-1,0 |
| Shore A | 91 | 90 | 60 | 52 |
| Haptik (manuell) | hart | hart | sehr weich | sehr weich |

Die Bestimmung des Glanzes, des Gelgehaltes, des Shore A-Wertes sowie der Haptik wird im beiliegenden Anhang geschildert.

Die Produkte der Vergleichsbeispiele und diejenigen der erfindungsgemäßen Beispiele unterscheiden sich wie folgt: Aus der Tabelle 4 ist es ersichtlich, dass die Produkte gemäß den erfindungsgemäßen Beispielen 1 und 2 denjenigen nach den Vergleichsbeispielen 1 und 2 deutlich überlegen sind, nämlich im Hinblick auf den Glanz sowie die manuell ermittelte Haptik nach dem Tiefziehen sowie die Shore-Härte A.
**1.** Die Gelgehalte wurden nach der Extraktionsmethode erhalten. Die Proben wurden bei einer Dicke von ca. 0,5 mm in Quadrate einer Kantenlänge von ca. 1,0 mm geschnitten. Die Proben (ca. 100 mg) wurden dann in Reagenzgläsern vorgelegt, welche mit Pfropfen aus rostfreiem Stahldraht versehen sind, die ein Aufschwimmen der Proben verhindern.
   Die Reagenzgläser wurden mit 100 ml Xylol gefüllt und mit einer Alufolie verschlossen, um ein Abdampfen des Lösemittels zu verhindern. Das Xylol wurde dann zum Sieden erhitzt. Die Probekörper ließ man etwa 24 h in siedendem Xylol. Anschließend wurde das Gel-Xylol-Gemisch über eine Siebtrommel mit einer Maschenwelle von 200 Mesh filtriert, wobei das Gel in der Siebtrommel verblieb. Die Siebtrommeln wurden auf Metallplatten gestellt und bei 140°C 3 h lang im Umluftofen getrocknet. Nach dem Abkühlen auf Raumtemperatur wurde der Gehalt ausgewogen und zur Einwaage ins Verhältnis gesetzt.
**2.** Der Glanz wurde wie folgt bestimmt: Die Ermittlung des Glanzes nach dem Tiefziehen gemäß Tabelle 4 erfolgte hierbei bei einer Verstreckung von 80 bis 100% unter einem Winkel von 60° mit einem Gerät Byk Gardner Mikro Gloss.
**3.** Der Shore A-Wert wird bestimmt nach DIN EN ISO 868 (Stand: 10-2003).
**4.** Die Haptik (manuell) wurde wie folgt ermittelt: Es wurden firmeninterne Testpersonen die Flachware sowie Muster der zum Bauteil verarbeiteten beschriebenen Konstruktion zur Bewertung vorgelegt. Als Prüfkriterium galt das subjektive Empfinden einer jeden Testperson bei Berühren der Oberflächen. Die Testperson sollte dabei bewerten, ob das erfindungsgemäße Muster 1) härter, 2) gleich und 3) weicher als das Vergleichsbeispiel ist.

## Patentansprüche

1. Verfahren zur Herstellung einer lackierten genarbten Folie oder eines Folienlaminats mit einer lackierten genarbten Oberfolie und mit mindestens einer Unterfolie, wobei eine polymere Ausgangsmischung zu einer Folie extrudiert oder die Folie als Oberfolie mit einer Unterfolie zu einem Folienlaminat coextrudiert oder die Folie als Oberfolie gesondert mit der Unterfolie verbunden wird, die Folie oder die Oberfolie des Folienlaminats in einem Prägeschritt genarbt und darauf mit Elektronenstrahlen behandelt wird, wobei zur Extrusion eine polymere Ausgangsmischung mit einem Gehalt an einem Ethylen-Propylen-Dien-Mischpolymer (EPDM) einer Shore-Härte A von 40 bis 80 und einem thermoplastischen Polyolefin (TPO) einer Shore-Härte A von 40 bis 90 herangezogen wird, wobei die polymere Ausgangsmischung weitgehend unvernetzt ist, um nach der Extrusion eine lackierte genarbte Folie bzw. ein lackiertes genarbtes Folienlaminat zu bilden, und dann die lackierte genarbte Folie bzw. die lackierte genarbte Oberfläche des Folienlaminats mit Elektronenstrahlen derartig zu behandeln, bis sich ein Gelgehalt von 10 bis 70 Gew.-% eingestellt hat, wobei der Gelgehalt der lackierten Folie bzw. lackierten Oberfolie vor dem Vernetzen weniger als 3 Gew.-% beträgt und wobei der Gelgehalt der Folie bzw. der Oberfolie des Folienlaminats durch Behandeln mit Elektronenstrahlen auf 10 bis 70 Gew.-% eingestellt wird.

2. Verfahren nach Anspruch 1, **dadurch gekennzeichnet, dass** der Gelgehalt der lackierten Folie bzw. lackierten Oberfolie vor dem Vernetzen 0 bis weniger als 1 Gew.-% beträgt.

3. Verfahren nach einem der Ansprüche 1 oder 2, **dadurch gekennzeichnet, dass** die polymere Ausgangsmischung 10 bis 50 Gew.-% EPDM, insbesondere 30 bis 40 Gew.-% EPDM und 50 bis 90 Gew.-%, insbesondere 65 bis 75 Gew.-% TPO enthält.

4. Verfahren nach mindestens einem der vorhergehenden Ansprüche, **dadurch gekennzeichnet, dass** die polymere Ausgangsmischung zusätzlich LLDPE (linear low density polyethylene), insbesondere als teilweisen Ersatz der Bestandteile EPDM und/oder TPO enthält, wobei in der polymeren Ausgangsmischung 17 bis 35 Gew.-% LLDPE, 17 bis 35 Gew.-% EPDM und 35 bis 65 Gew.-% TPO enthalten sind.

5. Verfahren nach mindestens einem der vorhergehenden Ansprüche, **dadurch gekennzeichnet, dass** die Bestandteile der polymeren Ausgangsmischung folgende Charakteristiken aufweisen:
LLDPE einen MFI (190°C, 2,16 kg) von 0,05 bis 5,0, insbesondere von 0,5 bis 2,0 g/10 min und/oder eine Shore-Härte A von 40 bis 80, insbesondere von 50 bis 60;
TPO einen MFI (230°C, 2,16 kg) von 0,05 bis 5,0, insbesondere von 0,5 bis 1,0 g/10 min, und/oder eine Shore-Härte A von 70 bis 85;
EPDM eine Shore-Härte A von 45 bis 60, und/oder einen Dien-Gehalt von 0,5 bis 15 Gew.-%, insbesondere von 2 bis 10 Gew.-%.

6. Verfahren nach mindestens einem der vorhergehenden Ansprüche, **dadurch gekennzeichnet, dass** der Gelgehalt der Folie bzw. der Oberfolie des Folienlaminats durch Behandeln mit Elektronenstrahlen auf 30 bis 60 Gew.-%, eingestellt wird, insbesondere durch Behandeln mit Elektronenstrahlen einer Strahlungsdosis von 20 bis 150 kGy, insbesondere von 40 bis 80 kGy.

7. Verfahren nach mindestens einem der vorhergehenden Ansprüche, **dadurch gekennzeichnet, dass** die Oberfolie durch Coextrusion, Kaschieren oder durch Verkleben mit einer kompakten oder einer geschäumten Unterfolie versehen wird.

8. Verfahren nach mindestens einem der vorhergehenden Ansprüche, **dadurch gekennzeichnet, dass** die Oberfolie bzw. das Laminat aus Oberfolie und Unterfolie mit einer Textilschicht versehen wird.

9. Verfahren nach mindestens einem der vorhergehenden Ansprüche, **dadurch gekennzeichnet, dass** das Folienlaminat mit der lackierten genarbten Oberfolie im Rahmen eines einzigen Verfahrensschritts hergestellt wird, bei dem auf die Unterseite der lackierten Oberfolie eine geschäumte Unterfolie laminiert und die Oberfolie gleichzeitig geprägt und anschließend die Behandlung mit Elektronenstrahlen durchgeführt wird.

10. Verfahren nach mindestens einem der vorhergehenden Ansprüche, **dadurch gekennzeichnet, dass** dem polymeren Ausgangsmaterial bzw. den Ausgangsmaterialien der weiteren Schichten des Folienlaminats Additive einverleibt werden.

11. Verfahren nach Anspruch 10, **dadurch gekennzeichnet, dass** als Additive Antioxidantien, Lichtschutzmittel, Gleitmittel und/oder Pigmente eingesetzt werden, dies insbesondere in einer Menge von 0,5 bis 5 Gew.-% der jeweiligen Schicht.

12. Verfahren nach Anspruch 11, **dadurch gekennzeichnet, dass** als Antioxidantien Phenol-Derivate und/oder Phosphite und/oder als Lichtschutzmittel sterisch gehinderte Amine eingesetzt werden.

13. Lackierte genarbte Folie oder mehrlagiges Folienlaminat mit einer lackierten genarbten Oberfolie, erhältlich nach einem Verfahren nach mindestens einem der vorhergehenden Ansprüche und wobei die Folie bzw. die Oberfolie eine Shore-Härte A von 40 bis 80, insbesondere 60 bis 80, und einen Gelgehalts von 10 bis 70% Gew.-%, insbesondere von 30 bis 60 Gew.-% aufweist.

14. Verwendung einer Folie oder eines Folienlaminats nach Anspruch 13 als tiefgezogenes, insbesondere hinterspritztes oder hinterpresstes oder hinterschäumtes Formteil, insbesondere in Flugzeugen, in Kraftfahrzeugen, für Fahrzeuginnenverkleidungen oder -verkleidungsteile, insbesondere Schalttafeln oder Armaturenbrettern, Säulen, Kraftfahrzeugseitenverkleidungen, -türverkleidungen und -ablagen.

15. Verwendung einer Folie oder eines Folienlaminats nach Anspruch 13 als ungeschwächte Dekorfolie für Airbagverkleidungen.

## Claims

1. A method for the production of a lacquered grained film or film laminate with a lacquered grained top film and with at least one bottom film, wherein a polymeric starting mixture is extruded into a film or the film is co-extruded as a top film with a bottom film to form a film laminate, or the film is separately bonded to the bottom film as a top film, the film or the top film of the film laminate is grained in a single embossing step and then electron beams are applied. wherein a polymeric starting mixture with a content of an ethylenepropylene-diene composite polymer (EPDM) of a Shore hardness A of 40 to 80 and a thermoplastic polyolefin (TPO) of a Shore hardness A of 40 to 90 is used for extrusion, wherein the polymeric starting mixture is largely non-cross-linked to form a lacquered grained film or laminate after extrusion, and then treat the lacquered grained foil or the lacquered grained surface of the foil laminate with electron beams until a gel content of 10 to 70 wt% has been obtained, wherein the gel content of the lacquered foil or lacquered top foil is less than 3 wt% before cross-linking and wherein the gel content of the foil or the top film of the foil laminate is adjusted to 10 to 70 wt% by treating it with electron beams.

2. The method of claim 1, **characterized in that** the gel content of the varnished foil or lacquered top foil prior to crosslinking is 0 to less than 1% by weight.

3. A method according to any one of claims 1 or 2, **characterized in that** the polymeric starting mixture contains 10 to 50 % EPDM by weight, in particular 30 to 40 % EPDM by weight and 50 to 90% by weight, in particular 65 to 75% TPO by weight.

4. A method according to at least one of the preceding claims, **characterized in that** the polymeric starting mixture additionally contains LLDPE (linear low density polyethylene), in particular as a partial substitute for the components EPDM and/or TPO, wherein the polymer starting mixture contains 17 to 35 wt% LLDPE, 17 to 35 wt% EPDM and 35 to 65 wt% TPO.

5. A method according to at least one of the preceding claims, **characterized in that** the constituents of the polymeric starting mixture have the following characteristics:
LLDPE an MFI (190°C, 2.16 kg) of 0.05 to 5.0, in particular from 0.5 to 2.0 g/10 min and/or a Shore hardness A of 40 to 80, in particular from 50 to 60;
TPO an MFI (230°C, 2.16 kg) of 0.05 to 5.0, in particular from 0.5 to 1.0 g/10 min, and/or a Shore hardness A of 70 to 85;
EPDM has a Shore hardness A of 45 to 60, and/or a diene content of 0.5 to 15% by weight, in particular 2 to 10% by weight.

6. A method according to at least one of the preceding claims, **characterized in that** the gel content of the foil or the top film of the film laminate is adjusted to 30 to 60 % by weight by treatment with electron beams, in particular by treatment with electron beams of a radiation dose of 20 to 150 kGy, in particular 40 to 80 kGy.

7. A method according to at least one of the preceding claims, **characterized in that** the top film is provided with a compact or a foamed bottom film by coextrusion, lamination or bonding.

8. A method according to at least one of the preceding claims, **characterized in that** the top film or laminate of top film and bottom film is provided with a textile layer.

9. A method according to at least one of the preceding claims, **characterized in that** the film laminate is produced with the lacquered grained top film in the course of a single process step, wherein a foamed bottom film is laminated to the underside of the painted top film and the top film is simultaneously embossed and then the electron beam treatment is carried out.

10. A method according to at least one of the preceding claims, **characterized in that** additives are incorporated into the polymer starting material or starting materials of the further layers of the film laminate.

11. A method according to claim 10, **characterized in that** antioxidants, light stabilizers, lubricants and/or pigments are used as additives, in particular in a quantity of 0.5 to 5% by weight of the respective layer.

12. A method according to claim 11, **characterized in that** phenol derivatives and/or phosphites are used as antioxidants and/or sterically hindered amines as light stabilizers.

13. A lacquered grained film or multi-layer film laminate with a lacquered grained top film, available by a process according to at least one of the preceding claims, wherein the film or topfoil has a shore hardness A of 40 to 80, in particular 60 to 80, and a gel content of 10 to 70% by weight, in particular 30 to 60% by weight

14. The use of a film or a film laminate according to claim 13 as a deep-drawn, in particular back-injected or back-pressed or back-foamed moulded part, in particular in aircraft, in motor vehicles, for vehicle interior trim or trim parts, in particular switchboards or dashboards, pillars, motor vehicle side panels, door cladding and shelves.

15. The use of a film or a film laminate according to claim 13, as an unattenuated decorative film for airbag panels.

## Revendications

1. Une méthode de production d'un film grainé laqué ou d'un film laminé avec un film supérieur grainé laqué et avec au moins un film du fond, dans laquelle un mélange polymère de départ est extrudé dans un film ou le film est co-extrudé en film supérieur avec un film du bas pour former un film de film, ou le film est collé séparément au film du bas en tant que film supérieur, le film ou le film supérieur du film est grainé en une seule étape de bossage, puis des faisceaux d'électrons sont appliqués. où un mélange polymérique de départ contenant un polymère composite d'éthylène-propylène-diène (EPDM) d'une dureté de Shore A de 40 à 80 et d'un polyoléfine thermoplastique (TPO) d'une dureté de Shore A de 40 à 90 est utilisé pour l'extrusion, où le mélange de départ polymère est en grande partie non réticulé pour former un film ou un laminé laqué après extrusion, puis traiter la feuille laquée à grain ou la surface laquée du feuillet à grains laqués avec des faisceaux d'électrons jusqu'à obtenir une teneur en gel de 10 à 70 % en poids, où la teneur en gel de la feuille laquée ou de la feuille supérieure laquée est inférieure à 3 % en poids avant la réticulation, et où la teneur en gel de la feuille ou du film supérieur du feuillet est ajustée à 10 à 70 % en poids en la traitant avec des faisceaux d'électrons.

2. La méthode de la revendication 1 se **caractérise par le fait que** la teneur en gel de la feuille vernie vernie ou laquée avant la réticulation est de 0 à moins de 1 % en poids.

3. Une méthode selon l'une des revendications 1 ou 2, **caractérisée par le fait que** le mélange polymère de départ contient 10 à 50 % d'EPDM en poids, en particulier 30 à 40 % d'EPDM en poids et 50 à 90 % en poids, en particulier 65 à 75 % de TPO en poids.

4. Une méthode selon au moins une des affirmations précédentes, **caractérisée en ce que** le mélange polymérique de départ contient en plus du LLDPE (polyéthylène linéaire de basse densité), en particulier comme substitut partiel aux composants EPDM et/ou TPO, où le mélange de départ polymère contient 17 à 35 % de LLDPE en poid, 17 à 35 % en poids d'EPDM et 35 à 65 % de TPO en poids.

5. Une méthode selon au moins une des affirmations précédentes, **caractérisée par le fait que** les constituants du mélange polymère de départ possèdent les caractéristiques suivantes :
LLDPE un MFI (190°C, 2,16 kg) de 0,05 à 5,0, en particulier de 0,5 à 2,0 g/10 min et/ou une dureté Shore A de 40 à 80, en particulier de 50 à 60 ;
TPO un MFI (230°C, 2,16 kg) de 0,05 à 5,0, en particulier de 0,5 à 1,0 g/10 min, et/ou une dureté Shore A de 70 à 85 ;
L'EPDM a une dureté Shore A de 45 à 60, et/ou une teneur en diène de 0,5 à 15 % en poids, en particulier de 2 à 10 % en poids.

6. Une méthode selon au moins une des affirmations précédentes, **caractérisée par le fait que** la teneur en gel de la feuille ou du film supérieur du film est ajustée à 30 à 60 % en poids par traitement avec des faisceaux d'électrons, en particulier par traitement avec des faisceaux d'électrons d'une dose de rayonnement de 20 à 150 kGy, en particulier de 40 à 80 kGy.

7. Une méthode selon au moins une des revendications précédentes, **caractérisée par le fait que** le film supérieur est fourni d'un film compact ou d'un film inférieur mousseux par coextrusion, lamination ou collage.

8. Une méthode selon au moins une des revendications précédentes, **caractérisée par le fait que** le film supérieur ou le laminé du film supérieur et du film inférieur est doté d'une couche textile.

9. Une méthode selon au moins une des revendications précédentes, **caractérisée par le fait que** le film laminé est produit avec le film supérieur grainé laqué au cours d'une seule étape de procédé, où un film inférieur mousseux est laminé sous le film peint et le film supérieur est simultanément embossé, puis le traitement par faisceau d'électrons est effectué.

10. Une méthode selon au moins une des revendications précédentes, **caractérisée par** l'incorporation d'additifs dans le matériau de départ polymère ou les matériaux de départ des couches suivantes du film laminé.

11. Une méthode selon la revendication 10, **caractérisée par** l'utilisation d'antioxydants, de stabilisateurs lumineux, de lubrifiants et/ou de pigments comme additifs, en particulier en quantité de 0,5 à 5 % en poids de la couche respective.

12. Une méthode selon l'affirmation 11, **caractérisée par le fait que** les dérivés du phénol et/ou les phosphites sont utilisés comme antioxydants et/ou des amines stériquement entravées comme stabilisateurs lumineux.

13. Un film laqué grainé ou un film laminé multicouche avec un film supérieur grainé laqué, disponible par un procédé selon au moins une des affirmations précédentes, où le film ou le feuillet supérieur a une dureté shore A de 40 à 80, en particulier 60 à 80, et une teneur en gel de 10 à 70 % en poids, en particulier 30 à 60 % en poids

14. L'utilisation d'un film ou d'un film laminé selon l'affirmation 13 comme pièce moulée à injection arrière, contre-pressée ou moulée en mousse arrière, en particulier dans l'avion, les véhicules motorisés, pour les garnitures ou pièces de garnitures intérieures des véhicules, en particulier les tableaux électriques ou tableaux de bord, les piliers, les panneaux latéraux des véhicules motorisés, les revêtements de portes et les étagères.

15. L'utilisation d'un film ou d'un stratifié de film selon la revendication 13, comme film décoratif non atténué pour les panneaux d'airbag.
